# FASCICULE DE BREVET EUROPEEN

(11) **EP 2 314 811 B1**
(45) Date de publication et mention de la délivrance du brevet: **04.07.2012**
(21) Numéro de dépôt: 09425430.7
(22) Date de dépôt: 26.10.2009
(51) Int. Cl.: E05B 65/12, E05B 65/20

(54) **Poignée de type à palette comprenant un système d'inertie**
Griff vom Typ Schieber, der ein Trägheitssystem umfasst
Paddle-type handle comprising an inertia system

(43) Date de publication de la demande: 27.04.2011
(73) Titulaire: Valeo S.p.A., 10026 Santena (TO) (IT)
(72) Inventeur: Savant, Florenzo, 10044 Pianezza (IT); Gallas, Christian, 10044 Pianezza (IT)
(74) Mandataire: Jacquot, Ludovic R. G.

(56) Documents cités:
- EP-B1- 1 556 569
- WO-A1-2009/034035
- DE-A1-102005 049 142
- US-A- 6 042 159

## Description

L'invention concerne les poignées de véhicules automobiles et plus particulièrement les systèmes de sécurité anti-ouverture intempestive équipant de telles poignées.

Le brevet EP 1 556 569 divulgue une poignée de type « poignée frigo », traditionnellement connue pour son inertie aux choc, équipée d'une masse inertielle venant, sous l'effet d'un tel choc, s'interposer sur le trajet d'un levier d'entraînement relié cinétiquement à une partie de préhension de la poignée.

La présente invention vise quant à fournir un moyen de blocage d'un mouvement inopiné de poignée lors d'un choc latéral dans le cas d'une poignée de type palette.

Ce but est atteint selon l'invention grâce à une poignée selon la revendication 1.

D'autres caractéristiques, buts et avantages de l'invention apparaîtront à la lecture de la description détaillée faite en référence aux figures annexées sur lesquelles :
- la figure 1 est une vue de derrière d'une poignée selon un premier mode de réalisation ;
- la figure 2 est une vu partielle et de côté de cette même poignée.
- la figure 3 est une vue de derrière d'une poignée selon un deuxième mode de réalisation ;
- la figure 4 représente un organe de retenue selon un mode de réalisation de l'invention ;
- la figure 5 est une vue de derrière d'une poignée selon un troisième mode de réalisation de l'invention ;
- la figure 6 est une vue de face d'une poignée selon un quatrième mode de réalisation de l'invention ;
- la figure 7 est une vue de derrière d'une poignée selon ce même quatrième mode de réalisation de l'invention.

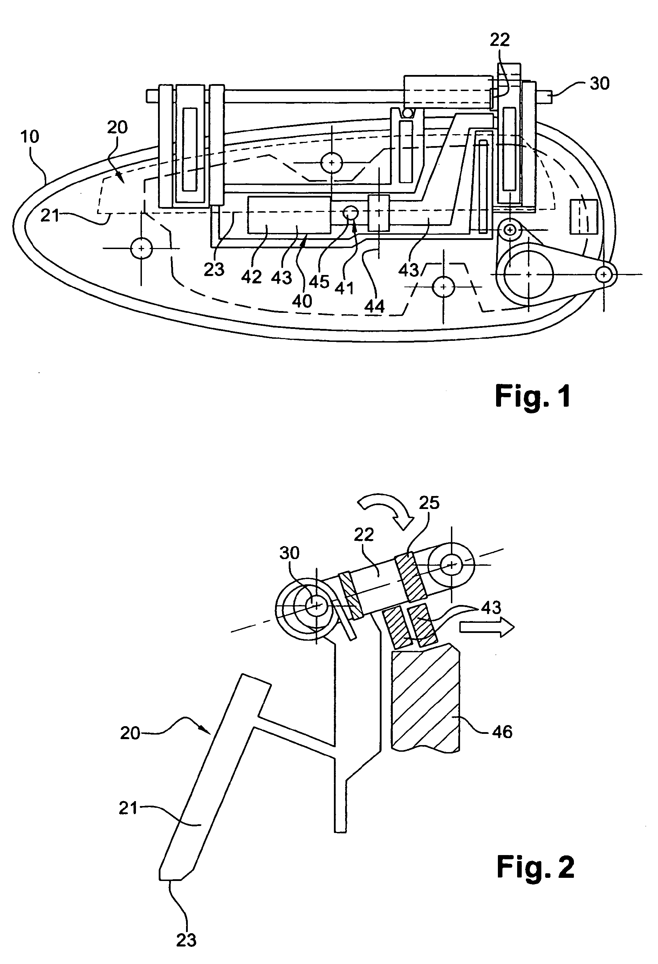

En référence à la figure 1, il peut être constaté que la poignée selon le premier mode de réalisation de l'invention comprend, comme dans l'art antérieur, un cadre fixe 10 et une palette 20 montée pivotante sur ce cadre autour d'un axe 30.

La partie mobile ou palette 20 présente une palette de préhension 21 constitué d'un flanc de matière plastique sensiblement plat et exposé au contact manuel. La palette est rappelée vers sa position de repos contre la partie fixe par un ressort 4 de type hélicoïdal enroulé autour de l'axe 3.

A la figure 2, on constate que la poignée palette 2 se prolonge par un bras 22 venu de matière avec elle ou rapporté de manière solidaire vers l'intérieur de la porte du véhicule. Le bras 22 pivote donc autour de l'axe 3 avec le reste de la palette, et décrit un mouvement vers le bas à l'intérieur de la porte.

A l'extrémité de ce bras 22 est fixée l'extrémité d'un câble dont l'entraînement actionne une serrure non représentée.

La poignée selon ce mode de réalisation présente en outre un pendulier d'inertie 40 monté sur la partie fixe autour d'un axe verticale 41 et constitué principalement de deux bras opposés 42 et 44 situés de part et d'autre de l'axe 41. Le bras 42 est d'une masse plus importante que le bras 44 de sorte qu'un choc sur la poignée occasionne un balancement du balancier 40 dicté par l'inertie du bras 42.

Le bras 42 se situe, dans un plan parallèle au plan principale de la poignée, sensiblement au droit du centre de gravite de palette de préhension 21.

Plus particulièrement, le bras 42 présente une excroissance 43 formant masse inertielle laquelle est située à un degré d'avancement le long de la poignée qui la situe dans un tiers central de la zone d'étendue de la palette.

Ainsi positionnée, il s'avère que la masse d'inertie reproduit le même comportement dynamique que la palette en cas de choc. Tenant compte du fait qu'un choc latéral sur le véhicule se traduit par un accélération vibratoire et d'orientation selon les trois axes de l'espace, cette accélération étant variable en orientation au cours des vibrations, il s'avère nécessaire à la fiabilité de la poignée que la masse d'inertie reproduise bien le mouvement de déplacement de la palette en cas de choc afin d'anticiper cette dernière.

Il s'avère qu'en positionnant la masse inertielle dans les deux tiers longitudinaux les plus avant de la palette par rapport à la direction du véhicule, la masse inertielle étant en outre positionnée de manière à se trouver également au droit, au moins en partie, de la partie de préhension de la palette, on obtient une combinaison de positionnements respectivement longitudunaux et transversaux, qui procure un résultat spécialement efficace en termes de fidélité aux chocs de la masse inertielle.

Au l'intérieur de cette gamme en positionnement longitudinal et transversal particulièrement avantageuse, un positionnement de la masse inertielle de manière légèrement décalée vers l'avant s'avère augmenter encore la fiabilité au choc de la masse inertielle, car la masse inertielle présent alors de surcroît une sensibilité à la déformation de la tôle de la porte, typiquement en avant de la poignée, qui provoque l'apparition d'une accélération supplémentaire sur la poignée et apporte une couche de fiabilité supplémentaire.

Aussi une masse d'inertie située dans la moitié avant du tiers central de la longueur de la palette présente une fiabilité tout particulière.

Néanmoins, un positionnement de la masse inertielle proche du centre de gravité de la palette de préhension donne une fiabilité à la masse inertielle aussi on garde avantageusement une proximité de la masse inertielle avec le centre longitudinal de la palette.

En termes de degré de positionnement de la masse d'inertie selon une direction transversale à la palette, il s'avère en effet avantageux de positionner la masse inertielle face à une moitié excentrée de la palette de préhension, c'est-à-dire dans la moitié la plus lointaine de l'axe de rotation de la palette. De manière préférentielle, la masse inertielle se trouve au droit de la bordure libre de la palette, i.e. au droit de la bordure 23 de la palette qui est éloignée de l'axe de rotation et qui est destinée à venir dans le creux de la main de l'utilisateur.

C'est au droit de cette bordure que la masse d'inertie reproduit au mieux le basculement de la palette.

Le bras 44 s'étend quant à lui selon trois tronçons successifs jusqu'à venir affleurer latéralement le bras d'extension 22 de la palette 20. Cette forme lui permet en effet de venir s'écarte latéralement d'un axe principal longitudinal du balancier 40, depuis une zone sensiblement centrale de la palette jusqu'à une zone déportée latéralement, i.e. au niveau du bras d'extension 22 de la palette.

Le bras 44 forme donc une pièce de butée qui s'interpose sur le trajet d'une pièce mobile de la poignée à savoir ici le bras 22. L'extrémité du bras 44 s'interpose sur le trajet d'une portion du bras 22 et plus particulièrement sur le trajet d'un appendice latéral 25 du bras 22.

Ainsi et tel que représenté sur la figure 2, l'extrémité du bras 44 présent deux positions possibles, l'une effacée et l'autre avancée vers l'intérieur de la porte, cette dernière position correspondant à une positionnement de l'extrémité du bras 44 juste au dessous de l'appendice 25, sur son trajet descendant.

Le pendulier 40 est rappelé vers sa position de repos effacée par un ressort 45 de compression ou de flexion.

Ainsi, le pendulier de blocage est basculant autour d'un axe 41 qui est sensiblement perpendiculaire à l'axe de rotation de la palette 20, ce qui s'avère particulièrement efficace en terme de fiabilité au choc, et permet la mise en oeuvre d'un pendulier ayant une masse inertielle 40 sensiblement au droit du tiers central de la palette de préhension et un bras de blocage arrivant jusqu'à une zone latérale où il peut bloquer efficacement un bras d'extension de la palette 20.

Plus particulièrement, le bras 42 présente une excroissance 43 formant masse inertielle laquelle est située à un degré d'avancement le long de la poignée qui la situe dans un tiers central de la zone d'étendue de la palette.

Là encore, Ainsi positionnée, il s'avère que la masse d'inertie reproduit le même comportement dynamique que la palette en cas de choc. Tenant compte du fait qu'un choc latéral sur le véhicule se traduit par un accélération vibratoire et d'orientation selon les trois axes de l'espace, cette accélération étant variable en orientation au cours des vibrations, il s'avère nécessaire à la fiabilité de la poignée que la masse d'inertie reproduise bien le mouvement de déplacement de la palette en cas de choc afin d'anticiper cette dernière.

Il s'avère qu'en positionnant la masse inertielle dans les deux tiers longitudinaux les plus avant de la palette par rapport à la direction du véhicule, la masse inertielle étant en outre positionnée de manière à se trouver également au droit, au moins en partie, de la partie de préhension de la palette, on obtient une combinaison de positionnements respectivement longitudinaux et transversaux, qui procure un résultat spécialement efficace en termes de fidélité aux chocs de la masse inertielle.

Au l'intérieur de cette gamme en positionnement longitudinal et transversal particulièrement avantageuse, un positionnement de la masse inertielle de manière légèrement décalée vers l'avant s'avère augmenter encore la fiabilité au choc de la masse inertielle, car la masse inertielle présent alors de surcroît une sensibilité à la déformation de la tôle de la porte, typiquement en avant de la poignée, qui provoque l'apparition d'une accélération supplémentaire sur la poignée et apporte une couche de fiabilité supplémentaire.

Aussi une masse d'inertie située dans la moitié avant du tiers central de la longueur de la palette présente une fiabilité tout particulière.

Néanmoins, un positionnement de la masse inertielle proche du centre de gravité de la palette de préhension donne une fiabilité à la masse inertielle aussi on garde avantageusement une proximité de la masse inertielle avec le centre longitudinal de la palette.

En termes de degré de positionnement de la masse d'inertie selon une direction transversale à la palette, il s'avère en effet avantageux de positionner la masse inertielle face à une moitié excentrée de la palette de préhension, c'est-à-dire dans la moitié la plus lointaine de l'axe de rotation de la palette. De manière préférentielle, la masse inertielle se trouve au droit de la bordure libre de la palette, i.e. au droit de la bordure 23 de la palette qui est éloignée de l'axe de rotation et qui est destinée à venir dans le creux de la main de l'utilisateur.

C'est au droit de cette bordure que la masse d'inertie reproduit au mieux le basculement de la palette.

Pour renforcer encore le blocage de la palette, on prévoit un élément d'arrêt ferme 45 sous l'extrémité du bras 44, de sorte que l'extrémité du bras 44 se trouve prise en sandwich entre le bras 22 et l'élément d'arrêt ferme 46 lors d'un choc latéral. Le bras 44 ne subit alors aucune sollicitation verticale qui tendrait à endommager sa tenue au niveau de son articulation autour de l'axe 44. L'élément d'arrêt ferme 46 est préférentiellement solidaire de la partie fixe 10 de la poignée.

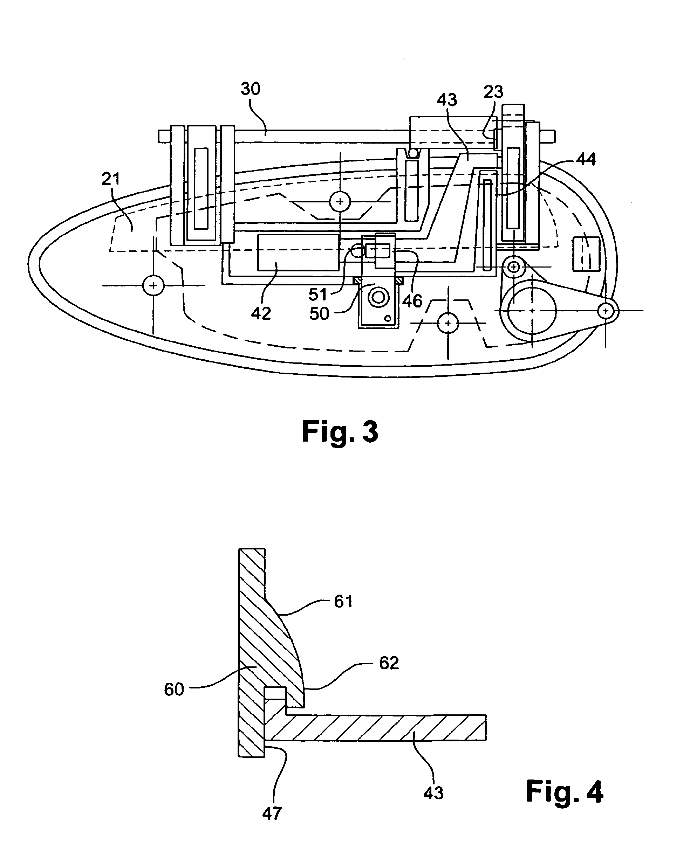

Selon un mode de réalisation représenté sur la figure 3, on adopté en outre un organe de retenue du balancier 40 dans sa position de blocage, sous la forme notamment d'une lame métallique 50 dont une face reçoit un ergot 46 du balancier en frottement et munie d'un orifice 51 qui réceptionne cet ergot après basculement du balancier 40.

Cet organe permet d'éviter un rebond du balancier en fin de course lequel rebond pourrait le renvoyer vers sa position initiale et provoquer alors son absence lors du rapprochement immédiatement ultérieur du bras d'extension de la palette au cours du choc.

En référence à la figure 4, la lame métallique 50 peut être remplacée par organe d'accroche 60 présentant une pente 61 et un ergot 62, de sorte que l'extrémité de la branche 47 du balancier 40 vient glisser contre la pente 61, se placer derrière l'ergot 62 et reste ainsi en position d'interposition sur le trajet de la palette 20.

Un tel organe d'accroche est avantageusement coulissant dans une direction transversale à la direction principale d'extension du bras 44, jusqu'à une position où l'organe d'accroche est effacé par rapport à cette extrémité et ne retient plus le bras 44.

Ainsi, par un actionnement manuel de l'organe d'accroche 60, on libère le bras 44 sans endommagement des différentes parties en présence et sans nécessité de contrôle particulier de l'intégrité des différents composants.

La partie fixe 1 de la poignée peut être placée à l'intérieur ou à l'extérieur de la porte, i.e. de manière visible ou cachée de l'extérieur.

Dans le cas d'une partie fixe 1 montée l'intérieur de la porte, et lorsque le volume disponible est réduit, on préfère éviter un dispositif anti-rebond tel que l'un de ceux décrits précédemment, d'autant que certaines palettes de préhension ont un poids faible et ne nécessitent donc pas de tel système de par leur comportement dynamique.

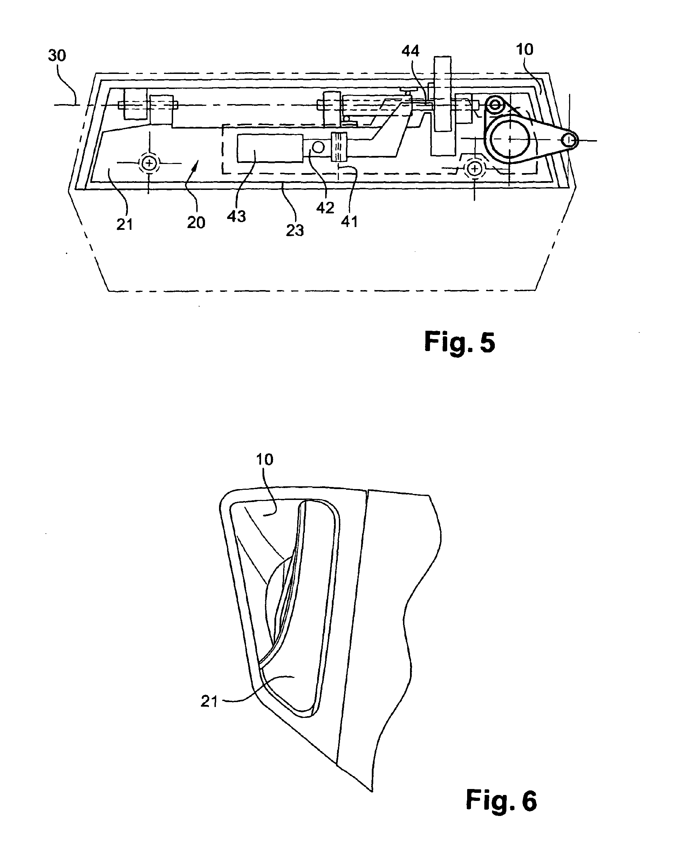

On a représenté une telle poignée à la figure 5. Cette poignée présente une palette de préhension sensiblement allongée et la masse inertielle 43 du balancier 40 se trouve là encore sensiblement au droit du tiers central de la palette de préhension 21. Plus particulièrement, le bras 42 présente une excroissance 43 formant masse inertielle laquelle est située à un degré d'avancement le long de la poignée qui la situe dans un tiers central de la zone d'étendue de la palette.

Ainsi positionnée, il s'avère que la masse d'inertie reproduit le même comportement dynamique que la palette en cas de choc. Tenant compte du fait qu'un choc latéral sur le véhicule se traduit par un accélération vibratoire et d'orientation selon les trois axes de l'espace, cette accélération étant variable en orientation au cours des vibrations, il s'avère nécessaire à la fiabilité de la poignée que la masse d'inertie reproduise bien le mouvement de déplacement de la palette en cas de choc afin d'anticiper cette dernière.

Il s'avère qu'en positionnant la masse inertielle dans les deux tiers longitudinaux les plus avant de la palette par rapport à la direction du véhicule, la masse inertielle étant en outre positionnée de manière à se trouver également au droit, au moins en partie, de la partie de préhension de la palette, on obtient une combinaison de positionnements respectivement longitudinaux et transversaux, qui procure un résultat spécialement efficace en termes de fidélité aux chocs de la masse inertielle.

Au l'intérieur de cette gamme en positionnement longitudinal et transversal particulièrement avantageuse, un positionnement de la masse inertielle de manière légèrement décalée vers l'avant s'avère augmenter encore la fiabilité au choc de la masse inertielle, car la masse inertielle présent alors de surcroît une sensibilité à la déformation de la tôle de la porte, typiquement en avant de la poignée, qui provoque l'apparition d'une accélération supplémentaire sur la poignée et apporte une couche de fiabilité supplémentaire.

Aussi une masse d'inertie située dans la moitié avant du tiers central de la longueur de la palette présente une fiabilité tout particulière.

Néanmoins, un positionnement de la masse inertielle proche du centre de gravité de la palette de préhension donne une fiabilité à la masse inertielle aussi on garde avantageusement une proximité de la masse inertielle avec le centre longitudinal de la palette.

En termes de degré de positionnement de la masse d'inertie selon une direction transversale à la palette, on positionne ici la masse inertielle dans en partie médiane de la largeur de la palette, c'est-à-dire entre son axe de rotation 30 et la bordure 23 qui est destinée à venir dans le creux de la main de l'utilisateur i.e. la bordure lointaine par rapport à l'axe de rotation 30 de la palette.

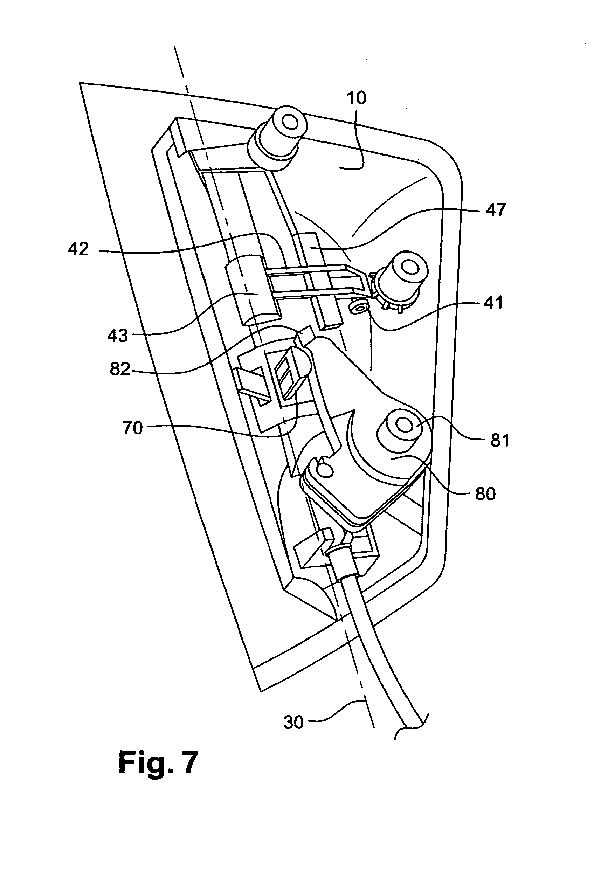

Telle que représentée aux figures 6 et 7, une poignée selon l'invention est placée en variante dans un montant de porte, s'étendant alors sensiblement verticalement au véhicule.

La poignée est avantageusement articulée autour d'un axe de rotation parallèle au montant de porte, et actionne un câble longeant le montant de porte.

La poignée est disposée de manière oblique par rapport à la verticale du véhicule, de sorte que la poignée là encore présente une partie longitudinale disposée sensiblement vers l'avant et une partie longitudinale disposée sensiblement vers l'arrière, dont il s'avère avantageux de tenir compte dans le positionnement de la masse inertielle.

Pour actionner ce câble, la palette de cette poignée se prolonge sous la forme d'un levier de palette 70 qui actionne lui-même un levier d'entraînement 80 monté rotatif autour d'un axe 81 transversal au plan principal de la partie fixe 10 de la poignée.

Dans ce mode de réalisation, un balancier 40 à masse inertielle 43 est lui-même disposé de telle sorte que cette masse inertielle se trouve en regard du centre longitudinal de la palette de préhension 21 de la poignée, c'est-à-dire sensiblement face au centre géométrique de la plaque exposée à l'extérieur de la poignée qui est saisissable par un utilisateur pour l'ouverture de la porte. La masse inertielle 43 est également à un avancement transversal à la poignée tel que la masse inertielle se trouve au moins partiellement au droit d'un partie de la palette de préhension, ici un partie proche de l'axe de rotation de la palette.

Le balancier 40 dans ce mode de réalisation se présente sous la forme d'une branche 42 s'étendant depuis un axe de rotation 41 et portant à son extrémité la masse inertielle 43. L'axe de rotation 41 est ici parallèle à l'axe de rotation 30 de la palette 20. Le bras 42 présente en outre, en partie intermédiaire entre l'axe 41 et la masse inertielle 43, une ailette 47 s'étendant transversalement au bras 42, c'est-à-dire parallèlement à l'axe 41, et qui forme pièce de butée pour venir de placer sur le trajet d'une pièce mobile de la poignée, à savoir ici le levier d'entraînement 80 et plus particulièrement l'extrémité 82 du levier d'entraînement 80 lorsque le bras 42 est déplacé sous l'effet de l'inertie d'un choc.

Ainsi positionnée, il s'avère que la masse d'inertie reproduit le même comportement dynamique que la palette en cas de choc. Tenant compte du fait qu'un choc latéral sur le véhicule se traduit par un accélération vibratoire et d'orientation selon les trois axes de l'espace, cette accélération étant variable en orientation au cours des vibrations, il s'avère nécessaire à la fiabilité de la poignée que la masse d'inertie reproduise bien le mouvement de déplacement de la palette en cas de choc afin d'anticiper cette dernière.

Il s'avère plus généralement qu'en positionnant la masse inertielle dans les deux tiers longitudinaux les plus avant de la palette par rapport à la direction du véhicule, la masse inertielle étant en outre positionnée de manière à se trouver également au droit, au moins en partie, de la partie de préhension de la palette, on obtient une combinaison de positionnements respectivement longitudinal et transversal, qui procure un résultat spécialement efficace en termes de fidélité aux chocs de la masse inertielle.

Au l'intérieur de cette gamme en positionnement longitudinal et transversal particulièrement avantageuse, un positionnement de la masse inertielle de manière légèrement décalée vers l'avant s'avère augmenter encore la fiabilité au choc de la masse inertielle, car la masse inertielle présent alors de surcroît une sensibilité à la déformation de la tôle de la porte, typiquement en avant de la poignée, qui provoque l'apparition d'une accélération supplémentaire sur la poignée et apporte une couche de fiabilité supplémentaire.

Aussi une masse d'inertie située dans la moitié avant du tiers central de ta longueur de la palette présente une fiabilité tout particulière.

Néanmoins, un positionnement de la masse inertielle proche du centre de gravité de la palette de préhension donne une fiabilité à la masse inertielle aussi on garde avantageusement une proximité de la masse inertielle avec le centre longitudinal de la palette.

L'ailette 47 s'étend avantageusement de part et d'autre du bras 42 pour rendre un tel balancier adaptable indifféremment sur une poignée droite ou une poignée gauche.

## Revendications

1. Poignée de porte de véhicule automobile comportant un élément de préhension (21) qui peut tourner autour d'un axe (30) sur une partie fixe (10) destinée à être fixée à la porte et est connectée à une serrure du véhicule, et une pièce de butée (44, 47) faisant partie d'un balancier (40) qui est pourvu d'une masse d'inertie (43) et est articulé à la partie fixe de façon à pivoter autour d'un axe (41) de telle sorte que lors d'un pivotement violent du balancier (40) la pièce de butée (44, 47) se déplace sur le trajet d'une pièce mobile de la poignée et empêche l'actionnement de la serrure connectée à la poignée, **caractérisée en ce que** l'élément de préhension est une palette de préhension (20) et la masse d'inertie est disposée sur la poignée à un avancement longitudinal de cette dernière situé dans les deux tiers avant de la longueur de la palette de préhension (21) par rapport à un référentiel du véhicule, et à un avancement transversal à la poignée tel que la masse inertielle se trouve au moins partiellement au droit de la palette de préhension, de telle sorte que la masse d'inertie subisse les mêmes forces d'inertie que le moyen de préhension.

2. Poignée selon la revendication 1, **caractérisée en ce que** la masse inertielle se situe à un degré de positionnement transversal à la palette qui est tel que la masse inertielle est au droit d'une limite inférieure de la palette.

3. Poignée selon la revendication 1 ou la revendication 2, **caractérisée en ce que** la masse inertielle se trouve à un degré d'avancement longitudinal de la poignée situé vers l'avant du véhicule par rapport au centre longitudinal de la palette.

4. Poignée selon l'une quelconque des revendications précédentes, **caractérisé en ce que** le balancier (40) possède un axe de rotation situé à un degré d'avancement longitudinal de la poignée se trouvant vers l'arrière du véhicule par rapport à la masse inertielle.

5. Poignée selon l'une quelconque des revendications précédentes, **caractérisée en ce que** la palette de préhension (21) présente un axe de rotation (30) qui est parallèle à l'axe de rotation du balancier (40).

6. Poignée selon l'une quelconque des revendications 1 à 4, **caractérisée en ce que** le balancier et la palette présentent des axes de rotation respectifs qui sont sensiblement perpendiculaires l'un à l'autre.

7. Poignée selon l'un quelconque des revendications précédentes, **caractérisée en ce que** le balancier (40) présente deux bras (42, 44) situés de part et d'autre de l'axe de rotation du balancier, l'un des bras portant la masse d'inertie 43 et l'autre bras formant la pièce de butée (44,47).

8. Poignée selon la revendication précédente, **caractérisée en ce que** le bras (44) formant la butée (44) décrit trois tronçons successifs dont un tronçon intermédiaire oblique par rapport aux deux autres tronçons, de telle sorte que lesdits deux autres tronçons ont sensiblement une même orientation mais présentent un décalage latéral l'un par rapport à l'autre.

9. Poignée selon la revendication précédente, **caractérisée en ce que** l'orientation des dits autres tronçons du bras formant butée (44) est sensiblement la même que l'orientation de l'axe de rotation de la palette de préhension (21)

10. Poignée selon l'une quelconque des revendications précédentes, **caractérisée en ce qu'**elle comprend un élément de retenue du balancier réalisant un maintien du balancier en position déplacée suite à un choc sur la porte du véhicule.

## Claims

1. Motor-vehicle door handle comprising a gripping element (21) that can rotate about a spindle (30) on a fixed portion (10) designed to be fixed to the door and is connected to a lock of the vehicle, and an abutment part (44, 47) forming part of a rocker (40) which is provided with an inertial mass (43) and is articulated on the fixed portion so as to pivot about a spindle (41) so that, when there is a violent pivoting of the rocker (40), the abutment part (44, 47) moves on the path of a movable part of the handle and prevents the actuation of the lock connected to the handle, **characterized in that** the gripping element is a gripping lever plate (20) and the inertial mass is placed on the handle at a longitudinal advancement of the latter situated in the front two thirds of the length of the gripping lever plate (21) relative to a frame of reference of the vehicle, and at a transverse advancement to the handle such that the inertial mass is at least partially in line with the gripping lever plate, so that the inertial mass sustains the same forces of inertia as the gripping means.

2. Handle according to Claim 1, **characterized in that** the inertial mass is situated at a transverse degree of positioning to the lever plate which is such that the inertial mass is in line with a lower limit of the lever plate.

3. Handle according to Claim 1 or Claim 2, **characterized in that** the inertial mass is at a degree of longitudinal advancement of the handle situated toward the front of the vehicle relative to the longitudinal center of the lever plate.

4. Handle according to any one of the preceding claims, **characterized in that** the rocker (40) has a rotation spindle situated at a degree of longitudinal advancement of the handle that is toward the rear of the vehicle relative to the inertial mass.

5. Handle according to any one of the preceding claims, **characterized in that** the gripping lever plate (21) has a rotation spindle (30) that is parallel to the rotation spindle of the rocker (40).

6. Handle according to any one of Claims 1 to 4, **characterized in that** the rocker and the lever plate have respective rotation spindles which are substantially perpendicular to one another.

7. Handle according to any one of the preceding claims, **characterized in that** the rocker (40) has two arms (42, 44) situated on either side of the rotation spindle of the rocker, one of the arms supporting the inertial mass (43) and the other arm forming the abutment part (44, 47).

8. Handle according to the preceding claim, **characterized in that** the arm (44) forming the abutment (44) describes three successive sections of which one intermediate section is oblique relative to the other two sections, so that said other two sections have substantially one and the same orientation but have a lateral offset relative to one another.

9. Handle according to the preceding claim, **characterized in that** the orientation of said other sections of the arm forming an abutment (44) is substantially the same as the orientation of the rotation spindle of the gripping lever plate (21).

10. Handle according to any one of the preceding claims, **characterized in that** it comprises an element for retaining the rocker, holding the rocker in displaced position following an impact on the door of the vehicle.

## Patentansprüche

1. Kraftfahrzeug-Türgriff, der ein Greifelement (21), das auf einem ortsfesten Teil (10) um eine Achse (30) drehen kann, der dazu bestimmt ist, an der Tür befestigt zu sein und mit einem Schloss des Fahrzeugs verbunden ist, und ein Anschlagbauteil (44, 47) aufweist, das Teil eines Schwenkhebels (40) ist, der mit einer Schwungmasse (43) versehen und am ortsfesten Teil so angelenkt ist, dass er um eine Achse (41) schwenkt, so dass bei einem heftigen Schwenken des Schwenkhebels (40) das Anschlagbauteil (44, 47) sich auf der Bahn eines beweglichen Bauteils des Griffs verschiebt und die Betätigung des mit dem Griff verbundenen Schlosses verhindert, **dadurch gekennzeichnet, dass** das Greifelement ein Greifflügel (20) ist, und die Schwungmasse auf dem Griff in einem Längsvorschub dieses letzteren, der sich im vorderen Zweidrittel der Länge des Greifflügels (21) bezüglich eines Bezugssystems des Fahrzeugs befindet, und in einem derartigen Quervorschub zum Griff angeordnet ist, dass die Schwungmasse sich zumindest teilweise im rechten Winkel vor dem Greifflügel befindet, so dass die Schwungmasse die gleichen Trägheitskräfte erfährt wie die Greifeinrichtung.

2. Griff nach Anspruch 1, **dadurch gekennzeichnet, dass** die Schwungmasse sich in einem Querpositionierungsgrad zum Flügel befindet, der so ist, dass die Schwungmasse sich im rechten Winkel vor einer unteren Grenze des Flügels befindet.

3. Griff nach Anspruch 1 oder 2, **dadurch gekennzeichnet, dass** die Schwungmasse sich in einem Längsvorschubgrad des Griffs befindet, der bezüglich der Längsmitte des Flügels zur Vorderseite des Fahrzeugs angeordnet ist.

4. Griff nach einem der vorhergehenden Ansprüche, **dadurch gekennzeichnet, dass** der Schwenkhebel (40) eine Drehachse besitzt, die sich in einem Längsvorschubgrad des Griffs befindet, der bezüglich der Schwungmasse zur Rückseite des Fahrzeugs angeordnet ist.

5. Griff nach einem der vorhergehenden Ansprüche, **dadurch gekennzeichnet, dass** der Greifflügel (21) eine Drehachse (30) aufweist, die parallel zur Drehachse des Schwenkhebels (40) ist.

6. Griff nach einem der Ansprüche 1 bis 4, **dadurch gekennzeichnet, dass** der Schwenkhebel und der Flügel jeweilige Drehachsen aufweisen, die im Wesentlichen lotrecht zueinander sind.

7. Griff nach einem der vorhergehenden Ansprüche, **dadurch gekennzeichnet, dass** der Schwenkhebel (40) zwei Arme (42, 44) aufweist, die sich zu beiden Seiten der Drehachse des Schwenkhebels befinden, wobei der eine Arm die Schwungmasse (43) trägt und der andere Arm das Anschlagbauteil (44,47) bildet.

8. Griff nach dem vorhergehenden Anspruch, **dadurch gekennzeichnet, dass** der den Anschlag (44) bildende Arm (44) drei aufeinanderfolgende Abschnitte beschreibt, darunter einen bezüglich der zwei anderen Abschnitte schrägen Abschnitt, so das die zwei anderen Abschnitte im Wesentlichen die gleiche Ausrichtung haben, aber einen seitlichen Versatz zueinander aufweisen.

9. Griff nach dem vorhergehenden Anspruch, **dadurch gekennzeichnet, dass** die Ausrichtung der anderen Abschnitte des einen Anschlag (44) bildenden Arms im Wesentlichen die gleiche ist wie die Ausrichtung der Drehachse des Greifflügels (21).

10. Griff nach einem der vorhergehenden Ansprüche, **dadurch gekennzeichnet, dass** er ein Rückhalteelement des Schwenkhebels enthält, das nach einem Stoß auf die Tür des Fahrzeugs einen Halt des Schwenkhebels in verschobener Stellung realisiert.
